# EUROPÄISCHE PATENTANMELDUNG

(11) **EP 4 458 786 A1**
(43) Veröffentlichungstag der Anmeldung: **06.11.2024**
(21) Anmeldenummer: 24153314.0
(22) Anmeldetag: 23.01.2024
(51) Int. Cl.: C04B 20/10

(54) **PARTIKULÄRER FÜLLSTOFF MIT VERRINGERTER STAUBBILDUNG, VERFAHREN ZU DEREN HERSTELLUNG UND DEREN VERWENDUNG**

(30) Priorität: 02.05.2023 DE 102023111311
(71) Anmelder: Gebrüder Dorfner GmbH & Co. Kaolin- und Kristallquarzsand-Werke KG, 92242 Hirschau (DE)
(72) Erfinder: Süß, Marco, 92431 Neunburg vorm Wald (DE); Heyen, Kirstin, 92256 Hanbach (DE)
(74) Vertreter: Hannke, Christian

(57) **Zusammenfassung**

Die vorliegende Erfindung betrifft ein Verfahren zur Herstellung eines partikulären Füllstoffs mit geringer Staubbildung, der zur Verwendung in Verbundwerkstoffen geeignet ist, wobei die mittlere Partikelgröße des Füllstoffs gemessen mittels Luftstrahlsiebung und/oder Sedigraph ≤ 300 µm beträgt und ist durch die folgenden Schritte gekennzeichnet:
Bereitstellen von Trägerpartikeln, welche eine mittlere Partikelgröße gemessen mittels Luftstrahlsiebung und/oder Sedigraph ≤ 300 µm aufweisen, Bereitstellen eines Silans, Siloxans und/oder Silicones, Bereitstellen eines Paraffinöls, Herstellen einer flüssigen Beschichtungsmasse durch Vermengen des Silans, Siloxans und/oder Silicones mit dem Paraffinöl und optional weiterer Komponenten, Beschichten der Trägerpartikel mit der Beschichtungsmasse in einer Mischeinrichtung.

Außerdem betrifft die Erfindung einen partikulären Füllstoff mit geringer Staubbildung sowie die Verwendung eines solchen partikulären Füllstoffs als Füllstoff in einer Gießmasse und/oder einem Verbundwerkstoff also auch einen Verbundwerkstoff umfassend ein Bindemittel und einen solchen Füllstoff.

## Beschreibung

Die vorliegende Erfindung betrifft Partikel mit verringerter Staubbildung, sowie ein Verfahren zu deren Herstellung. Außerdem werden Möglichkeiten zur Verwendung von Partikeln mit verringerter Staubbildung aufgezeigt.

Viele anorganische Stoffe werden in unterschiedlichsten Anwendungen in partikulärer Form eingesetzt. Lediglich beispielhaft ist diesbezüglich auf Zement, Porzellan und Verbundwerkstoffe mit mineralischen Füllstoffen verwiesen. Als Verbundwerkstoff wird im Rahmen dieser Erfindung vereinfacht ein Polymer, enthaltend einen anorganischen und/oder organischen Füllstoff verstanden. Von besonderer Bedeutung ist diesbezüglich Quarz, welcher (beispielsweise in Form von Sand) weit verbreitet ist und in vielfältigen Anwendungen genutzt wird. Auch wenn viele der für diese Anwendungen genutzten anorganischen Stoffe im Normalfall hinsichtlich deren Gesundheitsgefährdung unbedenklich sind oder lediglich ein geringes Gesundheitsrisiko darstellen, wurde festgestellt, dass deren Verwendung in partikulärer Form insbesondere aufgrund einatembarer Stäube ein Gesundheitsrisiko darstellen kann. So wurde beispielsweise gefunden, dass bei der Be- und Verarbeitung quarzhaltiger Gesteine Staub unterschiedlicher Menge und Korngröße entsteht. Quarzfeinstaub gilt als krebserzeugender Arbeitsstoff, der zu Silikose führen und damit auch Lungenkrebs verursachen kann.

Da dieses Risiko nach derzeitigem Wissen in der geringen Partikelgröße der Feinstaubpartikel begründet ist und dieses nach der Weiterverarbeitung der anorganischen partikulären Stoffe beispielsweise zu Verbundwerkstoffen nicht mehr besteht, besteht weiterhin ein gro-ßer Bedarf an derartigen partikulären Stoffen.

Dabei hat insbesondere die Nachfrage nach partikulären Stoffen besonders geringer Partikelgröße zugenommen, da diese bei der Verwendung beispielsweise in Verbundwerkstoffen, diese besonders homogen erscheinen lassen, neben weiteren Vorteilen, wie z.B. verbessertem rheologischem Verhalten und damit verbesserter Verarbeitungseigenschaften.

Außerdem werden Füllstoffe verschiedener Farben nachgefragt. Farbige Füllstoffe können einem Verbundwerkstoff eine gewünschte Farbe verleihen. Mischungen verschieden gefärbter Füllstoffe können dazu genutzt werden, Verbundwerkstoffen ein Aussehen zu verleihen, dass natürlichen Steinen wie beispielsweise Granit nahekommt. Die farbgebenden Stoffe sollten dabei immer fest mit den Partikeln des Füllstoffs verbunden sein, um das Ablösen von diesen Partikeln beispielsweise durch im Bindemittel enthaltenes Lösungsmittel zu vermeiden.

Außerdem werden vermehrt Füllstoffe basierend auf nachwachsenden Rohstoffen eingesetzt. Bei deren Aufbereitung und der Einstellung eines definierten Korngrößenbereichs (beispielsweise etwa 0,1 - 0,5 mm) entsteht auch immer ein beträchtlicher Anteil Partikel mit deutlich geringerer Partikelgröße. Dieser kann oftmals nicht genutzt werden, was derartige Rohstoffe der Fraktion 0,1 - 0,5 mm verteuert und zu Lasten des ganzheitlichen Lösungsansatzes geht. Dass der Anteil mit sehr geringer Partikelgröße nicht genutzt wird, beruht unter anderem darauf, dass diese Partikel eine hohe spezifische Oberfläche aufweisen und/oder sehr saugfähig sind. Bei deren Einsatz in Verbundwerkstoffen führt dies zu einem erhöhten Bindemittel- bzw. Harzbedarf. Dies hat aufgrund der hohen Kosten für das Bindemittel / Harz wiederum Kostennachteile. Zudem ist die Verarbeitungsfähigkeit dadurch sehr stark eingeschränkt, da die Viskosität der Gießmasse bei der Verwendung derartiger Partikel stark ansteigt und dadurch der Formausbildungsprozess sehr stark eingeschränkt wird oder sogar sehr komplexe Formen nicht herstellbar sind, da die Gießmasse nicht in entlegene Bereiche der Gießform einfließen kann.

Es besteht daher der Bedarf, einen partikulären Füllstoff mit einer geringen mittleren Partikelgröße bereitzustellen, welcher bei der Handhabung möglichst wenig Staub bildet. Außerdem sollte ein solcher Füllstoff möglichst gefärbt und/oder einfärbbar sein. Außerdem sollte er zur Herstellung von Gießmassen für Verbundwerkstoffe geeignet sein.

Diese Aufgabe wird durch die Gegenstände der unabhängigen Patentansprüche gelöst.

Eine Lösung der der Erfindung zugrundeliegenden Aufgabe besteht in einem Verfahren zur Herstellung eines partikulären Füllstoffs mit geringer Staubbildung, der zur Verwendung in Verbundwerkstoffen geeignet ist, wobei die mittlere Partikelgröße des Füllstoffs gemessen mittels Luftstrahlsiebung und/oder Sedigraph ≤ 300 µm beträgt. In einer bevorzugten Variante wird ein Füllstoff mit einer mittlere Partikelgröße, gemessen mittels Luftstrahlsiebung und/oder Sedigraph von 25 - 100 µm verwendet, weiter bevorzugt 45-100 µm In einer weiteren ergänzenden oder alternativen bevorzugten Ausführungsform liegt die mittlere Partikelgröße, gemessen mittels Luftstrahlsiebung und/oder Sedigraph im Bereich von <45 µm, speziell <25 µm, bevorzugt 0,1 - 45 µm, besonders bevorzugt 0,1 - 25 µm. Die Korngrößenverteilungen der Füllstoffe können mono- bis hin zu multimodal sein.

Das Verfahren ist gekennzeichnet durch die Schritte:
Bereitstellen von Trägerpartikeln welche eine mittlere Partikelgröße gemessen mittels Luftstrahlsiebung und/oder Sedigraph ≤ 300 µm aufweisen,
Bereitstellen eines Silans, Siloxans und/oder Silicones,
Bereitstellen eines Paraffinöls,
Herstellen einer flüssigen Beschichtungsmasse durch Vermengen des Silans, Siloxans und/oder Silicones mit dem Paraffinöl und optional weiterer Komponenten,
Beschichten der Trägerpartikel mit der Beschichtungsmasse in einer Mischeinrichtung. Es hat sich gezeigt, dass durch ein solches Verfahren besonders einfach die Staubbildung verringert werden kann und eine Beschichtung auf die Trägerpartikel aufgebracht werden kann.

In einer bevorzugten Variante werden Trägerpartikel mit einer mittlere Partikelgröße, gemessen mittels Luftstrahlsiebung und/oder Sedigraph von 25 - 100 µm verwendet, weiter bevorzugt 45 - 100 µm In einer weiteren ergänzenden oder alternativen bevorzugten Ausführungsform liegt die mittlere Partikelgröße, gemessen mittels Luftstrahlsiebung und/oder Sedigraph im Bereich von < 45 µm, speziell < 25 µm, bevorzugt 0,1 - 45 µm, besonders bevorzugt 0,1 - 25 µm. Die Korngrößenverteilungen der eingesetzten Trägerpartikel können monobis hin zu multimodal sein. Es hat sich gezeigt, dass derartige Trägerpartikel besonders gut zur Herstellung von Füllstoffen geeignet sind.

Die Beschichtungsmasse kann neben den oben beschriebenen Komponenten weitere Komponenten enthalten. Eine der optionalen weiteren Komponenten ist vorzugsweise ausgewählt aus einer Gruppe, die Pigmente, Rheologieadditive, Haftvermittler, Hydrophobierungsmittel, Hydrophilierungsmittel und pH-Additive umfasst. Als Rheologieadditive sollen in diesem Zusammenhang Substanzen verstanden werden, mit denen das Fließverhalten eingestellt werden kann. Beispielsweise wirken derartige Substanzen dadurch, dass die Oberflächen der Füllstoffpartikel glatter werden und somit die Partikel leichter aneinander entlanggleiten können. In analoger Weise soll der Begriff pH-Additive derart verstanden werden, dass durch diese Substanzen der pH-Wert der Partikel (zumindest im Bereich deren Oberfläche) eingestellt werden kann. Dies kann beispielsweise bewirken, dass eine Bindung mit einem zur Herstellung einer Gießmasse eingesetzten Bindemittel verbessert wird. Ein positiver Effekt des Zusatzes eines pH-Additivs kann insbesondere bei der Verwendung einiger organischer Trägerpartikel beobachtet werden, da das heraus diffundieren färbender Stoffe aus den Trägerpartikeln (beispielsweise ähnlich dem Ausbluten von Holz) verhindert oder zumindest reduziert werden kann. Dadurch kann der gewünschte Farbeindruck dauerhaft gewährleistet werden.

Die weitere Komponente wird vorzugsweise als Pulver, Suspension, Lösung, Paste, Dampf oder Gas zugeführt. Sind mehrere weitere Komponenten vorgesehen, können diese gemeinsam oder getrennt voneinander eingebracht werden. Auch der Einsatz mehrerer verschiedener einzelner oder als Mischungen vorliegender weiterer Komponenten ist denkbar. Diese können miteinander oder nacheinander zugegeben werden.

Von besonderer Bedeutung sind jedoch Pigmente als optionale weitere Komponente. Durch den Zusatz eines Pigments zu der Beschichtungsmasse kann den Füllstoffpartikeln eine gewünschte Farbe verliehen werden. Dadurch lassen sich besonders homogen gefärbte Verbundwerkstoffe bei der Verwendung derartiger Füllstoffe herstellen. Oftmals kann bei der Verwendung gefärbter Füllstoffe sogar darauf verzichtet werden, dem Bindemittel oder anderen Komponenten einer Gießmasse färbende Substanzen zuzusetzen, um einen gewünschten Farbeindruck des daraus herstellbaren Verbundwerkstoffs zu erhalten.

Außerdem bietet das Zusetzen eines Pigments zu der Beschichtungsmasse die Möglichkeit, in verschiedenen Prozessen verschieden gefärbte Füllstoffe herzustellen. Dies wiederum bietet die Möglichkeit, verschieden gefärbte Füllstoffe in einer Gießmasse einzusetzen, beispielsweise um besonders natürlich erscheinende, beispielsweise granitähnliche, Verbundwerkstoffe herzustellen.

Vorzugsweise ist das Silan, Siloxan und/oder Silicone ausgewählt aus einer Gruppe, die lineare, unverzweigte, verzweigte, cyclische, Mono-, Di-, Trisilane, ein- oder mehrfach funktionalisierte Silane wie beispielsweise Alkyl-, Amino-, Methacryl-, Vinyl- und/oder Epoxy-funktionalisierte Silane, und weitere, als Reinstoff oder als Verdünnung und / oder Mischungen mit sich oder anderen umfasst. Diese Silane, Siloxane und/oder Silicone haben sich als besonders geeignet gezeigt, um einerseits eine ausreichend feste Bindung am Trägerpartikel zu erreichen und gleichzeitig auch eine feste Einbettung in einen Verbundwerkstoff zu gewährleisten.

Das Paraffinöl ist vorzugsweise ausgewählt aus einer Gruppe, die lineare, verzweigte, cyclische, mineralölbasierte Materialien und / oder biobasiertem Öl umfasst. Vorzugsweise weist es eine Viskosität im Bereich von 10 mPas bis hin zu 300 mPas auf. Ergänzend oder alternativ dazu kann auch die Verwendung des Paraffinöls bei erhöhter Temperatur und / oder in verdünnter Form und / oder in Mischungen untereinander oder mit anderen bevorzugt sein.

In einer bevorzugten Ausführungsform sind die Trägerpartikel ausgewählt aus einer Gruppe, die Silikate, Carbonate, Sulfate, Phosphate, Oxide, Kohlenstoff-basiert, natürlich oder synthetisch, kristallin oder amorph, geogen oder biogen oder Mischungen dieser umfasst. Weiter bevorzugt sind die Trägerpartikel ausgewählt aus einer Gruppe, die Kaolin, Montmorillonit, Talkum, Glimmer, Quarz, Sepiolith, Nakrit, Halloysit, Dickit, K-, Ca-. Na- oder Misch-Feldspäte, Wollastonit, Calcit, Dolomit, Baryt, Basalt, Korund, Glas, Borosilikatglas, Quarzglas, Keramik, recyclierten oder nachwachsenden Rohstoffen und Mischungen dieser untereinander und Mischungen dieser mit anderen Substanzen umfasst, wobei ganz besonders bevorzugte Ausführungsformen Trägerpartikel sind, ausgewählt aus einer Gruppe aus Quarz, Feldspat, Korund, Gläsern, Keramik und nachwachsenden Rohstoffen. Aus dieser Gruppe ausgewählte Trägerpartikel haben sich als besonders geeignet gezeigt, da sie zumindest hinsichtlich deren Eigenfarbe, deren Einfärbbarkeit, deren Dichte, deren Staubbildungsverhalten und/oder deren Härte den Anforderungen zur Verwendung als Füllstoff in Gießmassen zur Herstellung von Verbundwerkstoffen entsprechen.

Falls ein nachwachsender Rohstoff verwendet wird, liegt dieser vorzugsweise als gemahlene und/oder gebrochene Partikel vor. Dies ist damit begründet, dass nachwachsende Rohstoffe oftmals heterogen geformt sind und/oder in der Form, in der sie anfallen oder geerntet werden eine ungeeignete Größe aufweisen. Vorzugsweise werden sie daher durch Mahlen oder Brechen auf die gewünschte mittlere Partikelgröße (gemessen mittels Luftstrahlsiebung und/oder Sedigraph) im Bereich von 0,1 - 300 µm, bevorzugt 0,1 - 100, besonders bevorzugt 0,1 - 45 µm gebracht. Als Alternative oder ergänzend dazu können die Partikel durch ein Verfahren, das ausgewählt ist aus einer Gruppe, die Waschen, Sortieren, Trocknen, Brechen, Mahlen, Schneiden, Bleichen, Klassieren, Kompaktieren, Granulieren, Sprühgranulieren, Aufbaugranulieren, Wirbelschichtverfahren und Extrudieren umfasst auf die gewünschte Partikelgröße gebracht werden. Die Einstellung der gewünschten Partikelgröße kann bei Raumtemperatur oder gekühlt (Kryobruch) in Schutzgas oder atmosphärisch erfolgen.

Bezüglich der im Rahmen dieser Erfindung angegebenen Partikelgrößen wird angemerkt, dass diese sofern nicht explizit etwas anders angegeben ist als mittlere Partikelgröße (dso) zu verstehen sind, welche durch ein für diese Partikelgröße geeignetes Verfahren, nämlich Luftstrahlsiebung oder mittels Sedigraph, gemessen wurde. Es ist auch möglich, dass die angegebene mittlere Partikelgröße durch mehrere verschiedene Verfahren bestimmt wird. Oftmals weichen die bei Verwendung der verschiedenen Messmethoden erhaltenen Ergebnisse voneinander ab. Vorzugsweise liegen die Ergebnisse beider Messmethoden jedoch in dem jeweils angegebenen Bereich, beispielsweise ≤ 25 µm mittlere Partikelgröße des Füllstoffs.

Die Korngrößenbestimmung der Trägerpartikel und/oder der Füllstoffpartikel erfolgt vorzugsweise in flüssiger Suspension, bevorzugt in Wasser und mittels Sedigraph (Sedimentationsmethode). Dazu wird vorzugsweise jede hinsichtlich der Korngrößenverteilung zu messende Suspension 3 min. mit Ultraschall behandelt, um lockere Agglomerate zu zerstören.

Falls ein nachwachsender Rohstoff verwendet wird, ist das Rohmaterial vorzugsweise ausgewählt aus einer Gruppe, die Kerne, Schalen, Kernfolgeprodukte, Schalenfolgeprodukte, biobasierte Kunststoffe, biobasierte Monomere, biobasierte Polymere, Ligninfolgeprodukte, Holz, Holzfolgeprodukte (beispielsweise Späne, Fasern, Zellstoff, Lignin, Kork, Laub, Nadeln), Papier, Karton, Pressspanmaterialien, MDF (Mitteldichte Holzfaserplatte), HDF (Hochdichte Faserplatte), OSB (englisch für oriented strand board, Grobspanplatten), Faserverbunde, imprägnierte Faserverbunde, Dämmmaterialien, Kurzumtriebspflanzen und deren Folgeprodukte (beispielsweise Baumwolle, Gras, Stroh, Spelzen, Kleie, Hanffasern, Sisal, Jute), Obst- und Ackerfrüchte und deren Folgeprodukte (beispielsweise Zuckerrübenfasern, Melasse, Trester), Fermentationsmaterialien, Fermentationsrückstände und Vergleichbares (beispielsweise Hefezellen, Filtrationsrückstände der Wein, Saft und Bierherstellung), und Materialien tierischen Ursprungs (beispielsweise Wolle, Haare, Knochen) sowie Verbrennungsrückstände der zuvor genannten Materialien, insbesondere Aschen aus der Verbannung von Kernen und deren Folgeprodukte, Schalen und deren Folgeprodukte und Spelzen umfasst. Diese Rohstoffe haben den Vorteil, dass sie in großen Mengen verfügbar sind und/oder als Abfallstoff anfallen und daher sehr günstig sind.

In einer bevorzugten Verfahrensvariante wird ein Zwangsmischer als Mischeinrichtung verwendet. Derartige Mischer haben sich als besonders geeignet erwiesen, die (Träger-) Partikel so homogen zu verteilen, dass die Beschichtung homogen aufgebracht werden kann. Bevorzugt wird ein Mischer mit rotierendem Mischwerkzeug verwendet. Dabei haben sich Pflugmischer, Gegenstrom-Schnellmischer oder Langspaltmühle als besonders geeignet gezeigt. Die Verteilung der Partikel ist in einem Pflugmischer besonders gut. Insbesondere bevorzugt haben sich Pflugmischer mit beweglicher Trommel erwiesen. Diese haben den Vorteil, dass die Pflugscharen an der Trommel befestigt sein können und sich somit (während des Mischvorgangs) gemeinsam mit der Trommel bewegen. Dadurch ist kein separater Antrieb des Pflugs notwendig, so dass im Inneren des Mischers, beispielsweise im Bereich der Rotationsachse der Trommel, Raum für eine Einbringeinrichtung für die Beschichtungsmasse verbleibt.

In einer bevorzugten Verfahrensvariante wird die Beschichtungsmasse zumindest phasenweise während des Mischvorgangs in den Mischer geleitet. Dadurch kann erreicht werden, dass die Beschichtungsmasse homogen auf den (Träger-) Partikeln verteilt wird. Es ist dabei nicht notwendig, dass die Beschichtungsmasse während des gesamten Mischvorgangs in den Mischer geleitet wird. Vielmehr ist bevorzugt, dass die Einleitung der Beschichtungsmasse erst beginnt, wenn der Mischvorgang bereits gestartet ist. Dadurch sind die (noch unbeschichteten) Trägerpartikel bereits homogen in der Mischkammer verteilt. Außerdem befinden sich diese beim Beginn der Einleitung der Beschichtungsmasse in Bewegung, so dass sichergestellt ist, dass jeder Partikel zumindest kurzzeitig mit der Beschichtungsmasse in Kontakt kommt. Außerdem kann erreicht werden, dass einzelne Partikel nicht zu lange mit der Beschichtungsmasse in Kontakt bleiben und so übermäßig viel der Beschichtungsmasse binden.

Vorzugsweise wird die Beschichtungsmasse zumindest phasenweise während des Mischvorgangs in den Mischer eingesprüht. Das Einsprühen hat den Vorteil, dass auch die Beschichtungsmasse beim Einleiten in den Mischer und insbesondere vor deren ersten Kontakt mit zu beschichtenden Trägerpartikeln bereits über einen vergleichsweise großen Raum verteilt ist. Dadurch können gleichzeitig viel Partikel beschichtet werden und eine lokal übermäßig hohe Menge der Beschichtungsmasse kann verhindert werden.

Insbesondere ist bevorzugt, dass die Beschichtungsmasse mittels einer Vielzahl von Düsen in den Mischer eingesprüht wird. Die Verwendung mehrerer Düsen hat sich als vorteilhaft gezeigt, um eine große Menge Beschichtungsmasse in einem kurzen Zeitraum über ein großes (Innenraum-) Volumen des Mischers zu verteilen. Dabei sind Düsen vorzugsweise entlang einer Rotationsachse voneinander beabstandet und/oder weisen radial ausgehend von der Rotationsachse eine unterschiedliche Sprührichtung auf. Die entlang der Rotationsachse voneinander beabstandet Anordnung mehrerer Düsen ist insbesondere bei einer (im Wesentlichen) horizontalen Rotationsachse vorteilhaft, da so die Beschichtungsmasse über einen großen Anteil der Länge des Mischers und damit auf viele der zu beschichtenden Trägerpartikeln aufgesprüht werden kann. Zusätzlich können die Düsen auch hinsichtlich ihrer radialen Sprührichtung verschieden sein, um die zu beaufschlagende Fläche beziehungsweise die Anzahl der beim Aufsprühen unmittelbar erreichbaren Trägerpartikeln zu vergrö-ßern. Durch derartige Maßnahmen kann die Verweilzeit im Mischer reduziert werden. Insbesondere bei vertikal angeordneter Rotationsachse oder lediglich einer geringen Neigung der Rotationsachse (von beispielsweise ≤ 45°) bezüglich der Vertikalen ist eine Ausrichtung der Düsen in verschiedene radiale Sprührichtungen vorteilhaft, da auch so möglichst viele Trägerpartikeln unmittelbar beim Aufsprühen von der Beschichtungsmasse erreichbar sind.

Außerdem hat sich das Einsprühen der Beschichtungsmasse in den Mischer mittels einer Vielzahl von Düsen als vorteilhaft gezeigt, da so die Beschichtungsmasse bereits fein verteilt in den Mischer eingebracht wird und daher weniger (Misch-) Energie zum (gleichmäßigen) Verteilen der Beschichtungsmasse benötigt wird. Daher kann das Verfahren in dieser Variante bei nur vergleichsweise geringer Rotationsgeschwindigkeit der Mischeinrichtung erfolgen und dennoch besonders schnell die Trägerpartikel beschichten. Gleichzeitig hat dies auch den Vorteil, dass das Verfahren bei nur geringen Scherkräften durchgeführt werden kann, was - gegebenenfalls zusätzlich zu der oben beschriebenen Reduzierung des Feinstaubs bei der Handhabung des partikulären Füllstoffs - dazu führt, dass beim Mischen weniger Abrieb entsteht, welcher potentiell zur (Fein-) Staubbildung beitragen könnte. Vorzugsweise wird zur Herstellung der Beschichtungsmasse das Silan, Siloxans und/oder Silicones mit dem Paraffinöl in einem Gewichtsverhältnis von 80:20 bis 40:60, bevorzugt 70:30 bis 50:50 und besonders bevorzugt im Gewichtsverhältnis von 60:40 gemischt wird. Diese Verhältnisse haben sich als besonders geeignet gezeigt, um einerseits eine sichere und dauerhafte Beschichtung zu gewährleisten, andererseits aber auch eine gute und gleichmäßige Benetzung der Oberfläche und gegebenenfalls von Poren der Trägerpartikel zu ermöglichen. Außerdem kann bei Mischungsverhältnissen in dem oben genannten Bereich die Viskosität so eingestellt werden, dass eine homogene Verteilung und ein schnelles Einbringen in den Mischer möglich sind. Die oben genannten Bereichsgrenzen können in Abhängigkeit der jeweils ausgewählten Substanzen und/oder aufgrund von Messungenauigkeiten sowie eventuell verdunstendem Paraffinöl (beispielsweise zum Zeitpunkt des Einbringens und/oder zum Zeitpunkt der Herstellung der Beschichtungsmasse) von den oben genannten Werten abweichen. Vorzugsweise liegt eine solche Abweichung des Gewichtsverhältnis jedoch ± ≤ 5, bevorzugt ± ≤ 3.

Es wird darauf hingewiesen, dass im Rahmen dieser Erfindung alle Verhältnisangaben (und damit auch alle Prozentangaben) als auf das Gewicht bezogen verstanden werden sollen, sofern nicht explizit etwas anderes angegeben ist. Außerdem wird darauf hingewiesen, dass die Gewichtsangaben sowie alle aus einem Gewicht abgeleiteten Größen sich auf die Gewichtskraft im Schwerefeld der Erde beziehen. Alle Gewichtsangaben und daraus abgeleiteten Größen sollen daher analog auf als Masseangaben (mit dem gleichen Zahlenwert wie für die Gewichtsangaben) beziehungsweise der entsprechenden daraus abgeleiteten Größe (mit gleichem Zahlenwert wie für aus Gewichtsangaben abgeleiteten Größen) verstanden werden.

Bevorzugt werden pro 100 Gewichtsteile der Trägerpartikel 0,1 - 10 Gewichtsteile Beschichtungsmasse eingesetzt. Dieser Anteil hat sich als ausreichend gezeigt, um die Staubbildung effizient zu reduzieren und gleichzeitig die Füllstoffpartikel kostengünstig bereitstellen zu können. Der optimale Anteil der Beschichtungsmasse kann dabei in Abhängigkeit der verwendeten Trägerpartikel in dem oben genannten Bereich variieren. Es hat sich jedoch gezeigt, dass 0,2 - 5 Gewichtsteile Beschichtungsmasse in den meisten Fällen besonders gute Ergebnisse liefern. Weiter bevorzugt ist der Einsatz von 0,5 - 2 Gewichtsteile Beschichtungsmasse und insbesondere bevorzugt von etwa 1 Gewichtsteil Beschichtungsmasse. Die oben angegebenen Werte können (beispielsweise aus den oben genannten Gründen) variieren und/oder zu einigen Zeitpunkten von den angegebenen Werten abweichen. Vorzugsweise liegt diese Abweichung der Werte jedoch bei ± ≤ 0,2, bevorzugt ± ≤ 0,1.

Vorzugsweise werden die mit der Beschichtungsmasse beschichteten Trägerpartikel thermisch behandelt. Durch eine thermische Behandlung kann eine festere Anbindung der Beschichtungsmasse oder einzelner Komponenten daraus an den Trägerpartikel erfolgen. Die thermische Behandlung erfolgt vorzugsweise über einen Zeitraum von 5 Minuten bis 5 Stunden, weiter bevorzugt von 10 Minuten bis 2 Stunden, mehr bevorzugt von 15 Minuten bis 1 Stunde und insbesondere bevorzugt über etwa 30 Minuten (vorzugsweise ± ≤ 10 Minuten, weiter bevorzugt ± ≤ 5 Minuten). Diese Zeiträume haben sich als besonders geeignet gezeigt, um eine ausreichend gute Verteilung sowie feste Anbindung der Beschichtungsmasse oder einzelner Komponenten daraus an den Trägerpartikel zu erreichen. Außerdem sind bei diesen Behandlungszeit der Energieverbrauch und damit auch die CO₂-Emission gering.

Alternativ oder ergänzend zu den oben genannten Zeitangaben der thermischen Behandlung erfolgt die thermische Behandlung vorzugsweise bei einer Temperatur im Bereich von 30 - 300 °C, bevorzugt 40 - 200 °C, weiter bevorzugt 50 - 150 °C und insbesondere bevorzugt 70 - 100 °C. Diese Temperaturen haben sich als besonders geeignet gezeigt, um eine ausreichend gute Verteilung sowie feste Anbindung der Beschichtungsmasse oder einzelner Komponenten daraus an den Trägerpartikel zu erreichen. Außerdem sind bei diesen Temperaturen der Energieverbrauch und damit auch die CO₂-Emission gering.

Vorzugsweise findet dementsprechend die thermische Behandlung der Primärpartikel in einem Ofen statt, welcher ausgewählt ist aus einer Gruppe, die einen Drehrohrofen, einen Etagenofen, einem Wirbelschichtofen, einem Mahltrockenofen und einen Sprühtrockenofen umfasst.

Darüber hinaus kann es auch besonders vorteilhaft sein, die thermische Behandlung in reduzierender oder oxidierender Atmosphäre durchzuführen. Dies kann vorzugsweise in Abhängigkeit der Eigenschaften der Primärpartikel und/oder den gewünschten Produkteigenschaften erfolgen.

Es ist auch möglich, eine erste oder weitere Trocknung der Trägerpartikel und/oder des Rohmaterials bei einer ersten Temperatur und/oder über eine erste Zeit durchzuführen und eine zweite oder weitere Trocknung der Füllstoffpartikel bei einer zweiten Temperatur und/oder über eine zweite Zeit durchzuführen.

Vorteilhaft werden die Trägerpartikel auf eine gewünschte (beispielsweise mittlere) Partikelgröße eingestellt, beispielsweise gemahlen, gebrochen oder pulverisiert, klassiert oder gesichtet. Dies kann vorzugsweise mittels Stiftmühle, Rotormühle, Hammermühle, Strahlmühle oder einer vergleichbaren Mühle erfolgen. Vorzugsweise ist dieser Schritt kombiniert mit einer vorherigen und/oder gleichzeitigen Trocknung eines des eingesetzten Rohmaterials.

Sollte der erhaltene partikuläre Füllstoff nicht die gewünschte (mittlere) Partikelgröße aufweisen, kann dessen Herstellung optional zusätzlich eine Nass- oder Trockenmahlung, ggf. kombiniert mit einer Klassierung, z.B. Zyklonierung oder Sichtung folgen.

In einer bevorzugten Ausgestaltung wird eine Oberflächenbeschichtung der Trägerpartikel mit organischen und/oder anorganischen Additiven und/oder eine Vermischung mit anderen Füllstoffen oder Pigmenten vorgenommen.

In einer Variante ist bevorzugt eine erste Füllstoffmischung mit d₅₀ ≤ 25 µm mit einer zweiten oder weiteren Füllstoffmischung gleicher Korngröße oder auch eine andere, beispielsweise gröbere, Füllstoffmischung (vorzugsweise mit einer Partikelgröße d₅₀ im Bereich von 25 -100 µm) kombiniert werden. Dies hat sich insbesondere vorteilhaft zur Erzeugung eines hohen Füllgrads in einem Verbundwerkstoff gezeigt.

Die Reihenfolge der oben beschriebenen einzelnen Verfahrensschritte kann sofern nicht anders definiert zeitlich oder räumlich getrennt oder in beliebiger Kombination miteinander, in jeder nicht explizit ausgeschlossenen Reihenfolge erfolgen. Dabei ist auch denkbar, dass einzelne Verfahrensschritte auch mehrmals hintereinander durchgeführt werden können oder im Bedarfsfall weggelassen oder mit einem oder mehreren anderen, oben nicht genannten Verfahrensschritt kombiniert werden.

Bevorzugt ist das Verfahren dafür vorgesehen, geeignet und/oder bestimmt, einen des im Folgenden beschriebenen partikulären Füllstoff mit geringer Staubbildung sowie allen im Zusammenhang mit diesem partikulären Füllstoff beschriebenen Merkmale einzeln oder in Kombination miteinander zu erzeugen. Das Verfahren kann mit allen im Rahmen des partikulären Füllstoffs beschriebenen Merkmalen einzeln oder in Kombination miteinander durchgeführt werden. Umgekehrt können auch mehrere oder einzelne Verfahrensschritte vorgesehen sein, die sich aus den im Zusammenhang mit dem partikulären Füllstoff und den Beispielen beschriebenen Merkmalen ergeben oder in diesem Zusammenhang notwendig sind. Insbesondere ist vorgesehen, dass der im Folgenden beschriebenen partikulären Füllstoff nach dem obigen Verfahren hergestellt ist.

Ein weiterer wesentlicher Aspekt der vorliegenden Erfindung ist ein partikulärer Füllstoff mit geringer Staubbildung, der zur Verwendung in Verbundwerkstoffen geeignet ist, wobei der Füllstoff Partikel mit einer mittleren Partikelgröße gemessen mittels Luftstrahlsiebung und/oder Sedigraph ≤ 300 µm umfasst. In einer bevorzugten Variante wird ein Füllstoff mit einer mittlere Partikelgröße, gemessen mittels Luftstrahlsiebung und/oder Sedigraph von 25 - 100 µm verwendet, weiter bevorzugt 45 - 100 µm In einer weiteren ergänzenden oder alternativen bevorzugten Ausführungsform liegt die mittlere Partikelgröße, gemessen mittels Luftstrahlsiebung und/oder Sedigraph im Bereich von < 45 µm, speziell < 25 µm, bevorzugt 0,1 - 45 µm, besonders bevorzugt 0,1 - 25 µm. Die Korngrößenverteilungen der Füllstoffe können mono- bis hin zu multimodal sein. Der partikuläre Füllstoff zeichnet sich dadurch aus, dass die Partikel jeweils einen Trägerpartikel umfassen, deren mittlere Partikelgröße gemessen mittels Luftstrahlsiebung und/oder Sedigraph ≤ 300 µm beträgt und deren Oberfläche zumindest abschnittsweise mit einer Beschichtungsmasse, die ein Silan, Siloxan und/oder Silicone sowie ein Paraffinöl und optional eine oder mehrere weitere Komponenten umfasst, beschichtet ist.

In einer bevorzugten Variante weisen die Trägerpartikel eine mittlere Partikelgröße, gemessen mittels Luftstrahlsiebung und/oder Sedigraph von 25 - 100 µm auf, weiter bevorzugt 45 - 100 µm In einer weiteren ergänzenden oder alternativen bevorzugten Ausführungsform liegt die mittlere Partikelgröße, gemessen mittels Luftstrahlsiebung und/oder Sedigraph im Bereich von < 45 µm, speziell < 25 µm, bevorzugt 0,1 - 45 µm, besonders bevorzugt 0,1 - 25 µm. Die Korngrößenverteilungen der eingesetzten Trägerpartikel können mono- bis hin zu multimodal sein.

Vorzugsweise sind die Trägerpartikel ausgewählt aus einer Gruppe, die Silikate, Carbonate, Sulfate, Phosphate, Oxide, Kohlenstoff-basiert, natürlich oder synthetisch, kristallin oder amorph, geogen oder biogen oder Mischungen dieser umfasst. Weiter bevorzugt sind die Trägerpartikel ausgewählt aus einer Gruppe, die Kaolin, Montmorillonit, Talkum, Glimmer, Quarz, Sepiolith, Nakrit, Halloysit, Dickit, K-, Ca-. Na- oder Misch-Feldspäte, Wollastonit, Calcit, Dolomit, Baryt, Basalt, Korund, Glas, Borosilikatglas, Quarzglas, Keramik, recyclierten oder nachwachsenden Rohstoff und Mischungen dieser untereinander und Mischungen dieser mit anderen Substanzen umfasst, wobei ganz besonders bevorzugte Ausführungsformen Trägerpartikel sind, ausgewählt aus einer Gruppe aus Quarz, Feldspat, Korund, Gläsern, Keramik und nachwachsenden Rohstoffen. Dabei liegt dieser vorzugsweise als gemahlener und/oder gebrochener Partikel vor.

Falls ein Trägerpartikel einen nachwachsenden Rohstoff umfasst ist dessen Rohmaterial bevorzugt ausgewählt aus einer Gruppe, die Kerne, Schalen, Kernfolgeprodukte, Schalenfolgeprodukte, biobasierte Kunststoffe, biobasierte Monomere, biobasierte Polymere, Ligninfolgeprodukte, Holz, Holzfolgeprodukte (beispielsweise Späne, Fasern, Zellstoff, Lignin, Kork, Laub, Nadeln), Papier, Karton, Presspahnmaterialien, MDF (Mitteldichte Holzfaserplatte), HDF (Hochdichte Faserplatte), OSB (englisch für oriented strand board, Grobspanplatten), Faserverbunde, imprägnierte Faserverbunde, Dämmmaterialien, Kurzumtriebspflanzen und deren Folgeprodukte (beispielsweise Baumwolle, Gras, Stroh, Spelzen, Kleie, Hanffasern, Sisal, Jute), Obst- und Ackerfrüchte und deren Folgeprodukte (beispielsweise Zuckerrübenfasern, Melasse, Trester), Fermentationsmaterialien, Fermentationsrückstände und Vergleichbares (beispielsweise Hefezellen, Filtrationsrückstände der Wein, Saft und Bierherstellung), und Materialien tierischen Ursprungs (beispielsweise Wolle, Haare, Knochen) sowie Verbrennungsrückstände der zuvor genannten Materialien, insbesondere Aschen aus der Verbrennung von Kernen und deren Folgeprodukte, Schalen und deren Folgeprodukte und Spelzen umfasst.

In einer bevorzugten Ausführungsform weist der partikuläre Füllstoff einen Staubwert W_{R} nach DIN EN 15051-3 gemessen in einem Gegenstrom-Fallrohr von ≤ 100 mg/kg auf. Vorzugsweise liegt dieser Staubwert W_{R} ≤ 70 mg/kg, weiter bevorzugt ≤ 60 mg/kg und insbesondere bevorzugt ≤ 50 mg/kg.

Alternativ oder ergänzend dazu kann die geringe Staubbildung auch über den Staubwert W_{I} nach DIN EN 15051-3 angegeben werden. In einer bevorzugten Ausführungsform weist der partikuläre Füllstoff einen Staubwert W_{I} nach DIN EN 15051-3 gemessen in einem Gegenstrom-Fallrohr ≤ 10.000 mg/kg auf, vorzugsweise ≤ 7.000 mg/kg, weiter bevorzugt ≤ 5.000 mg/kg und insbesondere bevorzugt ≤ 4.000 mg/kg.

Durch diese Eigenschaft kann die Exposition von Personen gegenüber Staub bei der Handhabung des partikulären Füllstoffs reduziert werden.

Vorzugsweise umfasst die Beschichtungsmasse beziehungsweise eine aus Beschichtungsmasse gebildete Beschichtung mindestens eine weitere Komponente. Bevorzugt ist eine der optionalen weiteren Komponenten ausgewählt aus einer Gruppe, die Pigmente, Rheologieadditive, Haftvermittler, Hydrophobierungsmittel, Hydrophilierungsmittel und pH-Additive umfasst. Insbesondere ist bevorzugt, dass mindestens eine weitere Komponente ein Pigment ist.

Durch den Zusatz eines Pigments zu der Beschichtungsmasse kann ein Trägerpartikel mit einer farbigen Beschichtung versehen werden. Ein Pigment wird der Beschichtungsmasse vorzugsweise in einem Gewichtsanteil von bis zu 20 %, vorzugsweis im Bereich 0,2 - 15 % besonders bevorzugt im Bereich 0,5 - 10 % zugesetzt. Dies ermöglicht eine homogene Farbgebung von Verbundwerkstoffen, wenn ein so erhaltener partikulärer Füllstoff zu dessen Herstellung verwendet wird. Bevorzugt ist ein Pigment ausgewählt aus einer Gruppe, die Titandioxid, Braunstein, eisenoxidbasiertes Pigment, rußbasierte-Pigmente und organisches Pigment enthält. Insbesondere ist eine Beschichtungsmasse bevorzugt, die ein Weißpigment enthält. Dadurch können weiße partikuläre Füllstoffe erhalten werden, wie sie in großer Menge zur Herstellung von Sanitärmöbeln wie Waschbecken, Badewannen und Duschtassen verwendet werden.

Bevorzugt zeichnet sich der partikuläre Füllstoff durch ein geringes Ausbleichverhalten aus. Dies ist bei einem Umströmen des/der Prüfkörper für 8 Stunden mit Wasser einer Temperatur von 90 °C gekennzeichnet durch eine Veränderung des L*-Werts von ≤ 20 %, bevorzugt ≤ 15 % und insbesondere bevorzugt ≤ 10 % im Verhältnis zu dem L*-Wert dieser Probe vor diesem Test.

Ergänzend oder alternativ dazu beträgt eine Veränderung des a*-Werts eines Prüfkörpers nach einem Umströmen des/der Prüfkörper für 8 Stunden mit Wasser einer Temperatur von 90 °C ≤ 0,5, bevorzugt ≤ 0,1 und insbesondere bevorzugt ≤ 0,05 verglichen mit dem a*-Wert dieses Prüfkörpers vor diesem Test und/oder eine Veränderung des b*-Werts eines Prüfkörpers ≤ 1,0, bevorzugt ≤ 0,5, weiter bevorzugt ≤ 0,3 und insbesondere bevorzugt ≤ 0,2 verglichen mit dem b*-Wert dieses Prüfkörpers vor diesem Test.

Ein weiterer wesentlicher Aspekt der Erfindung ist eine Verwendung eines wie oben beschriebenen partikulären Füllstoffs als Füllstoff in einer Gießmasse und/oder einem Verbundwerkstoff. Eine Verwendung eines wie oben beschriebenen partikulären Füllstoffs kann einem Verbundwerkstoff vorteilhafte Eigenschaften verleihen und/oder den Verbundwerkstoff preiswerter machen. Insbesondere kann eine Verwendung eines wie oben beschriebenen partikulären Füllstoffs einem Verbundwerkstoff einen hohen Füllgrad, eine homogene Farbe, eine angenehme Haptik und/oder eine matte Oberfläche verleihen. Außerdem könnte ein solcher Füllstoff einem Verbundwerkstoff resistenter gegenüber Beschädigungen wie Abplatzungen, Rissen, Kratzern und/oder Verfärbungen machen. Ebenso kann durch derartige Füllstoffe eine verbesserte Chemikalienbeständigkeit und/oder Temperaturbeständigkeit (insbesondere gegenüber Heiß-Kalt-Wechselbedingungen, wie sie für Küchenspülen gefordert sind) erreicht werden.

Optional enthält der Verbundwerkstoff als weitere Komponente auch einen weiteren Füllstoff. Dieser kann eine gröbere, feiner oder identische mittlere Partikelgröße aufweisen. Vorzugsweise liegt die mittlere Korngröße des weiteren Füllstoffs im Bereich von 0,1 - 1,0 mm, bevorzugt 0,1 - 0,8 mm, weiter bevorzugt 25-100 µm. Der weitere Füllstoff ist bevorzugt ein Quarzsand, welcher entweder farbig beschichtet sein kann oder auch nicht eingefärbt sein kann und wobei diese Quarzsande zusätzlich oder alternativ dazu organisch modifiziert, beispielsweise silanisiert sein können.

Vorzugsweise umfasst eine solche Gießmasse wenigstens ein Bindemittel, wobei das Bindemittel bevorzugt ausgewählt ist aus einer Gruppe, die ein ungesättigtes flüssiges aushärtbares Polyesterharz, eine flüssige aushärtbare Gießharzmasse enthaltend MMA und/oder PMMA, ein aushärtbares Melaminharz, ein aushärtbares Formaldehydharz, ein aushärtbares Epoxidharz und ein Polyurethanharz umfasst. Auch Mischungen mehrerer Polymere und/oder Harze ist denkbar.

In einer bevorzugten Ausführungsform enthält die Gießmasse mindestens ein Additiv, bevorzugt ein Pigment und/oder ein Rheologieadditiv.

Ein weiterer wesentlicher Aspekt der Erfindung ist ein Verbundwerkstoff, der ein Bindemittel sowie einen wie oben beschriebenen Füllstoff umfasst.

Vorzugsweise ist ein solcher Verbundwerkstoff ausgebildet zu einem Bauteil, das ausgewählt ist aus einer Gruppe, die Küchenspüle, Waschbecken, Duschtasse, Badewanne, Arbeitsplatte, Boden-, Wand- oder Deckenplatte, Boden-, Wand- oder Deckenfliese, Formteil für den Möbelbau und Formteil für den Modellbau umfasst.

Weitere Vorteile beispielhafter Verfahren und des partikulären Füllstoffs sind anhand der folgenden Beispiele dargestellt. Einzelne Merkmale der beispielhaften Verfahren und partikulären Füllstoffe können jedoch auch unabhängig von anderen in dem jeweiligen Beispiel genannten Verfahrensschritten oder Eigenschaften durchgeführt werden beziehungsweise auftreten.

### Beispiel 1: Vergleich verschiedener Zusammensetzungen der Beschichtungsmassen

Für die Untersuchungen nach Beispiel 1 wurde Quarzmehl als Trägerpartikel verwendet. Dieses ist für starke Staubbildung bei der Handhabung bekannt.

Die Trägerpartikel wurden mit verschiedenen Anteilen einer Beschichtungsmasse beschichtet. Die Mengen der eingesetzten Beschichtungsmasse betrugen 0,5 % oder 1,0 % Masseprozent bezogen auf die Menge der eingesetzten Trägerpartikel.

Die Beschichtungsmasse enthielt Silan und Paraffinöl in verschiedenen Mengenverhältnissen. Diese wurden im Rahmen dieser Versuchsreihe von 60:40 über 50:50 zu 40:60 variiert.

In allen Fällen konnten partikuläre Füllstoffe mit geringer Staubbildung erhalten werden. Die erhaltenen Füllstoffe wurden auf ihre Farbveränderungen bei andauerndem Umströmen (über 8 Stunden) mit Heißwasser (90 °C) untersucht (in Tabelle 1 als Heißwassertest bezeichnet).

Die Ergebnisse der Farbprüfungen sind in Tabelle 1 dargestellt.

**Tabelle 1:**

| | | **Probe 1** | **Probe 2** | **Probe 3** | **Probe 4** | **Probe 5** | **Probe 6** |
|---|---|---|---|---|---|---|---|
| Menge Trägerpartikel | | 500 g | 500 g | 500 g | 500 g | 500 g | 500 g |
| Menge Silan | | 1,5 g | 3,0 g | 1,25 g | 2,5 g | 1,0 g | 2,0 g |
| Menge Paraffinöl | | 1,0 g | 2,0 g | 1,25 g | 2,5 g | 1,5 g | 3,0 g |
| vor Heißwassertest | L*-Wert | 26,89 | 26,89 | 26,46 | 26,83 | 26,01 | 26,81 |
| | a*-Wert | 0,18 | 0,18 | 0,18 | 0,18 | 0,26 | 0,18 |
| | b*-Wert | -0,40 | -0,39 | -0,60 | -0,47 | -0,33 | -0,60 |
| nach Heißwassertest | L*-Wert | 27,41 | 26,46 | 30,27 | 30,96 | 28,15 | 30,54 |
| | a*-Wert | 0,17 | ,021 | 0,06 | 0,04 | 0,06 | 0,03 |
| | b*-Wert | -0,28 | -0,07 | -0,57 | -0,59 | -0,42 | -0,67 |

Die dargestellten Ergebnisse zeigen, dass insbesondere bei den Proben 1 und 2 äußerst geringe Veränderungen der Farbe auftreten.

### Beispiel 2: Vergleich gleicher Mengenanteile der Beschichtungsmassen auf Quarzmehle verschiedener Feinheit

Für die Untersuchungen nach Beispiel 2 wurde ebenfalls Quarzmehl als Trägerpartikel verwendet. In diesem Fall wurden Quarzmehle unterschiedlicher Feinheiten verwendet. Die Trägerpartikel wurden mit einer Beschichtungsmasse beschichtet, die Silan und Paraffinöl im Mengenverhältnis 60:40 enthielt. Der Mengenanteil der eingesetzten Beschichtungsmasse wurde bei allen Versuchen konstant bei 2,5 % Masseprozent bezogen auf die Menge der eingesetzten Trägerpartikel gelassen.

Die Staubungsneigung wurde als Referenzmessverfahren gemäß DIN EN 15051-3 "Messung des Staubungsverhaltens von Schüttgütern - Teil 3: Verfahren mit kontinuierlichem Fall" untersucht. Die Ergebnisse sind in Tabelle 2 dargestellt.

**Tabelle 2: Meßergebnisbereiche, Staubmeßkenngrößen W_{I} und W_{R} und Klassifikation nach DIN EN 15051 Teil 3**

| | **QM1** | **QM2** | **QM3** |
|---|---|---|---|
| D50, µm | 60 | 37 | 15 |
| Schüttdichte, g/cm3 | 1,3 | 1,1 | 0,8 |
| Anzahl der Messungen | 3 | 3 | 3 |
| Messdauer. min | 30 | 30 | 30 |
| H2O-Gehalt, Ma-% | <0,1 | <0,1 | <0,1 |
| | | | |
| A-Staubwert W_{R}, original | 20-70 | 71-300 | >300 |
| A-Staub, Staubungsneigung, original | Gering staubend | Staubend | Stark staubend |
| A-Staubwert W_{R}, nach Oberflächenbeschichtung | <20 | <20 | 20-70 |
| A-Staub, Staubungsneigung, nach Oberflächenbeschichtung | staubarm | staubarm | Gering staubend |
| | | | |
| E-Staubwert W_{I}, original | 1000-4000 | 4000-15000 | >15000 |
| E-Staub, Staubungsneigung, original | Gering staubend | Staubend | stark staubend |
| E-Staubwert W_{I}, nach Oberflächenbeschichtung | <1000 | <1000 | 1000-4000 |
| E-Staub, Staubungsneigung, nach Oberflächenbeschichtung | staubarm | staubarm | Gering staubend |

In allen Fällen konnten partikuläre Füllstoffe mit deutlich redduzierter Staubbildung nach DIN EN 15051 Teil erhalten werden.

### Beispiel 3: Vergleich verschiedener Mengenanteile der Beschichtungsmassen

Für die Untersuchungen nach Beispiel 3 wurde ebenfalls Quarzmehl als Trägerpartikel verwendet. Die Trägerpartikel wurden mit einer Beschichtungsmasse beschichtet, die Silan und Paraffinöl im Mengenverhältnis 60:40 enthielt. Der Mengenanteil der eingesetzten Beschichtungsmasse wurde von 2,5 % oder 10 % Masseprozent bezogen auf die Menge der eingesetzten Trägerpartikel variiert.

In allen Fällen konnten partikuläre Füllstoffe mit geringer Staubbildung erhalten werden. Die erhaltenen Füllstoffe wurden analog zu den Messungen in Beispiel 1 auf ihre Farbveränderungen bei Heißwasserbehandlung untersucht.

Die Ergebnisse der Farbprüfungen sind in Tabelle 3 dargestellt. Da die Bedingungen zur Herstellung der Füllstoffe geringfügig von denjenigen aus Beispiel 1 abwichen (beispielsweise wurde die Ansatzgröße auf nur 100 g statt 500 g Trägermaterial reduziert), sind die Ergebnisse der Proben 1 und 2, obwohl sie aufgrund der eingesetzten Beschichtungsmassenzusammensetzung von ebenfalls 60:40 die Tabelle 3 ergänzen könnten, nicht nochmals aufgeführt.

**Tabelle 3:**

| | | **Probe 7** | **Probe 8** | **Probe 9** |
|---|---|---|---|---|
| Menge Beschichtungszusammensetzung (Mengenverhältnis Silan:Paraffinöl = 60:40) pro 100g Trägerpartikel | | 2,5 g | 5,0 g | 10,0 g |
| vor Heißwassertest | L*-Wert | 27,73 | 27,77 | 27,86 |
| | a*-Wert | 0,15 | 0,16 | 0,14 |
| | b*-Wert | -0,49 | -0,52 | -0,51 |
| nach Heißwassertest | L*-Wert | 28,90 | 29,18 | 29,15 |
| | a*-Wert | 0,14 | 0,16 | 0,18 |
| | b*-Wert | -0,34 | -0,39 | -0,34 |

Die dargestellten Ergebnisse zeigen, dass bei den Proben 7 - 9 der L*-Wert vor der Heißwasserbehandlung geringfügig höher ist als bei den Proben 1 - 6 aus Beispiel 1. Dies kann mit der dickeren und/oder homogeneren Beschichtung durch den erhöhten Beschichtungsmasseanteil erklärt werden. Auch bei den höheren Beschichtungsmasseanteilen der Proben 7 - 9 sind die auftretenden Veränderungen der Farbe jedoch äußerst gering.

### Beispiel 4: Versuche zur Einfärbbarkeit verschiedener Trägerpartikel

Die Untersuchungen zur Einfärbbarkeit verschiedener Trägerpartikel wurden lediglich exemplarisch an ausgewählten Trägerpartikeln durchgeführt. Die Bewertung erfolgte qualitativ durch visuelle Begutachtung.

Es wurden jeweils Proben verschiedener Trägerpartikel (nämlich Olivenkernmehl, ein Quarzmehl und ein thermisch behandeltes Quarz (-mehl)) in einem Intensiv-Schnellmische für 2 Minuten bei 3000 Umdrehungen pro Minute mit verschiedenen Pigmenten (Hombitan dWS (Titandioxid) und CM4 (Manganoxid)) und/oder Pigmentkonzentrationen sowie einer und einer Beschichtungsmasse beschichtet, die Silan und Paraffinöl im Mengenverhältnis 60:40 enthielt.

Alle untersuchten Materialien haben sich sehr gut beschichten lassen. Alle Partikel konnten eingefärbt werden. Auch bei besonders geringen mittleren Partikelgrößen der Trägerpartikel konnte die Staubbildung reduziert werden. Auffällig war die visuell höher erscheinende Farbtiefe bei eingefärbten Trägerpartikels mit besonders geringer mittleren Partikelgrößen (beispielsweise Quarzmehl).

### Beispiel 5: Herstellung eines Verbundwerkstoffs

Für diesen Versuch wurden in einem vorgewärmten Mischer mit horizontaler Rotationsachse 500 kg Trägerpartikel (Quarzmehl) vorgelegt und anschließend in den Mischer die Beschichtungsmasse eingedüst. Die verwendete Beschichtungsmasse enthielt ein Schwarzpigment sowie 5,2 kg (≈ 1 Masse-% bezogen auf die Trägerpartikelmasse) einer Mischung von Silan und Paraffinöl im Mengenverhältnis 60:40.

Die Mischung wurde nach vollständiger Zugabe der Beschichtungsmasse weiter gemischt, um eine homogene Benetzung der Trägerpartikel zu gewährleisten. Dabei wurde der Mischvorgang jedoch mehrfach pausiert, um ein sicheres Anhaften der Beschichtungsmasse an den Trägerpartikeln ermöglichen zu können. Außerdem kann durch diese Pausen der Energieeintrag und damit auch die insgesamt eingebrachten Scherkräfte reduziert werden.

Der erhaltene Füllstoff wurde unter Rühren einem mit einem Entlüfter versetzten Polyesterharz zugegeben. Die Mengen wurden so gewählt, dass der Füllstoffanteil 70 Masseprozent betrug. Nach vollständiger Durchmischung erfolgte die Zugabe eines Härters, im vorliegenden Fall eines Peroxids. Nach dessen Zugabe wurde für weitere 30 Sekunden gerührt und anschließend entlüftet. Die so erhaltene Gießmasse wurde zu einer Platte gegossen, welche für 4 Stunden bei 90 °C temperiert wurde. Nach dem Abkühlen der erhaltenen Verbundwerkstoffplatte (im Folgenden und in Tabelle 4 als "Platte 1" bezeichnet) erfolgte eine Farbmessung.

Die Farbmessung wurde nach einer Heißwasserbehandlung analog der im Zusammenhang mit Beispielen 1 und 3 beschriebenen (8 Stunden Umströmen der Platte mit Heißwasser von 90 °C) wiederholt. Die Ergebnisse der Farbmessung vor und nach dieser Behandlung sind in Tabelle 4 dargestellt.

**Tabelle 4:**

| | | **Platte 1** |
|---|---|---|
| vor Heißwassertest | L*-Wert | 26,18 |
| | a*-Wert | 0,14 |
| | b*-Wert | -0,32 |
| nach Heißwassertest | L*-Wert | 31,1 |
| | a*-Wert | -0,07 |
| | b*-Wert | -0,2 |

Die dargestellten Ergebnisse zeigen, dass die Farbveränderung in einem unter Verwendung der zuvor beschriebenen partikulären Füllstoffe hergestellten Verbundwerkstoff sehr gering ist. Der L*-Wert steigt etwas stärker an als dies bei den nicht in einen Verbundwerkstoff eingegossenen Partikeln gemessen wurde. Dies wird auf Effekte des Bindemittels zurückgeführt. Die Änderungen des a*-Werts und des b*-Werts sind vor und nach dem Heißwassertest mit -0,21 (a*-Wert) beziehungsweise 0,12 (b*-Wert) äußerst gering.

### Beispiel 6: Chemikalienbeständigkeit

Eine analog zu Platte 1 hergestellte Platte 2 wurde einem Chemikalienbeständigkeitstest nach DIN EN 13 310 unterzogen. Die getesteten Chemikalien waren: 10% Essigsäure, 5% Natronlauge, 70% Ethanol, Natriumhypochlorit-Lösung, 1% Methylenblau-Lösung, schwarzer Tee, Rotwein, schwarzer Kaffee, Haarfärbemittel, Vinylharzfarbe und Lippenstift. Die Chemikalienbeständigkeit wurde vergleichend gegenüber einem aus dem Stand der Technik bekannten Verbundwerkstoff ermittelt. Die Ergebnisse sind in Tabelle 6 dargestellt, wobei der Eintrag "Fleck" bedeutet, dass die jeweilige Substanz nach 36-stündiger Einwirkung eine optisch wahrnehmbare Veränderung der Oberfläche des Verbundwerkstoffs hervorgerufen hat. Die Tabelle 6 zeigt die Ergebnisse bei drei verschiedenen Nachbehandlungen. Links nach Abspülen der jeweiligen Platte und vorsichtigem Trockentupfen, in der Mitte nach anschließendem Abreiben mit einem feuchten Lappen und anschließendem Trockentupfen und rechts nach Behandeln mit Scheuerpulver und anschließendem Trockentupfen.

**Tabelle 6:**

| **Chemikalie / Testsubstanz** | **Vergleich** | **Platte 2** | **Vergleich** | **Platte 2** | **Vergleich** | **Platte 2** |
|---|---|---|---|---|---|---|
| | Abspülen | | Feucht abreiben | | Mit Scheuerpulver abreiben | |
| Essigsäure 10% | Fleck | | Fleck | | | |
| Natronlauge 5% | | | | | | |
| Ethanol 70% | | Fleck | | Fleck | | |
| Natriumhypochlorit | | | | | | |
| Methylenblau 1% | Fleck | Fleck | | | | |
| Natruimchloridlösung 85g/L | | | | | | |
| Tee | | | | | | |
| Rotwein | | | | | | |
| Kaffee | | | | | | |
| Haarfärbemittel | Fleck | Fleck | Fleck | Fleck | Fleck | |
| Farbe, Vinylharz | Fleck | Fleck | | | | |
| Lippenstift | Fleck | Fleck | Fleck | Fleck | | |

Wie Tabelle 6 zu entnehmen ist, entspricht die Chemikalienbeständigkeit der Platte 2 im Wesentlichen derjenigen des Vergleichsprodukts. Bei der Behandlung mit 10%iger Essigsäure war nach Abspülen und auch nach Abreiben sogar anders als beim Vergleichsprodukt kein Fleck erkennbar. Etwas schlechter schnitt die Platte 2 bei der Behandlung mit Ethanol ab, da sowohl nach Abspülen als auch nach dem feuchten Abreiben ein Fleck erkennbar war. Bemerkenswert ist, dass nach der Behandlung mit Scheuerpulver Haarfärbemittel von Platte 2 sogar ohne erkennbaren Fleck entfernbar war, wohingegen beim Vergleichsprodukt ein Fleck verblieb.

### Beispiel 7: Test der Temperaturwechselbeständigkeit nach DIN EN 13310

Die Temperaturwechselbeständigkeit eine Probekörpers wurde nach DIN EN 13310 getestet.

Dazu wird der Probekörper einem wiederholten Temperaturwechsel zwischen 95 °C zu 15 °C unterzogen. Für jeden Zyklus wird der Probekörper für 90 Sekunden 95 °C heißem Wasser ausgesetzt, anschließend 30 Sekunden ruhen lassen und anschließend 90 Sekunden 15 °C kaltem Wasser ausgesetzt. Nach 30 Sekunden Ruhezeit beginnt der nächste Zyklus. Der gesamte Test besteht aus 1.000 dieser Zyklen ohne weitere Unterbrechungen.

Der Probekörper mit dem beispielhaften erfindungsgemäßen Füllstoff hat diesen Test bestanden.

### Beispiel 8: Rheologie / Fließverhalten

Eine Probe der in Beispiel 5 erhaltenen Gießmasse wurde in einer Probeschale ausgegossen und die Verteilung der Gießmasse in der Probeschale untersucht. Verglichen wurde das Ergebnis mit einer aus dem Stand der Technik bekannten Gießmasse, wie sie auch zur Herstellung des in Beispiel 6 genutzten Vergleichsprodukts genutzt wurde.

Das bei der beispielhaften Gießmasse mit einem erfindungsgemäßen Füllstoff bessere Fließverhalten und insbesondere die bessere Verteilung der Gießmasse in der Probeschale ist in der Figur dargestellt. Dabei zeigt:

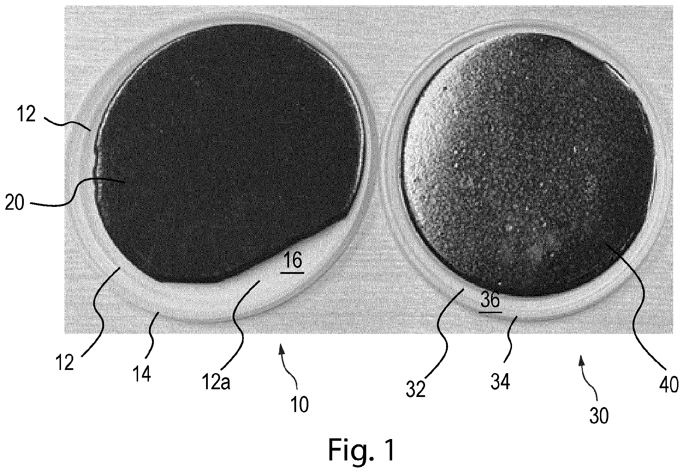

- Fig 1:: einen Vergleich der Verteilung verschiedener Gießmassen in einer Probeschale.

Fig 1 zeigt einen Vergleich der Verteilung verschiedener Gießmassen 20, 40 in einer Probeschale 10, 30. In der links dargestellten Schale 10 ist eine aus dem Stand der Technik bekannte Gießmasse 20 gezeigt. Wie zu erkennen ist, verteilt sich die Gießmasse 20 nicht gleichmäßig in der Schale 10. In Bereichen 12 nahe dem Rand 14 der Schale 10 ist der Schalengrund 16 noch zu erkennen, da die Gießmasse 20 aufgrund ihrer geringen Fließfähigkeit nicht bis in diese Bereiche 12 gelangen kann. Im unten rechts der Schale 10 erkennbaren Bereich 12a ist sogar ein vergleichsweise großer Bereich 12a nicht von der Gießmasse 20 benetzt.

Demgegenüber ist rechts das Ergebnis eines Tests des Fließverhaltens einer Gießmasse 40 mit einem beispielhaften erfindungsgemäßen Füllstoff in einer Probeschale 30 dargestellt. Wie insbesondere im Vergleich mit dem links dargestellten Vergleichsbeispiel erkennbar ist, verteilt sich die Gießmasse 40 wesentlich gleichmäßiger in der Schale 30. Die Bereiche 32 nahe dem Rand 34 der Schale 30, in der der Schalengrund 36 noch zu erkennen ist, da die Gießmasse 40 nicht bis dorthin verläuft, sind äußerst schmal. Das Fließverhalten der Gießmasse 40 mit einem beispielhaften erfindungsgemäßen Füllstoff ist folglich besser. Es kann erwartet werden, dass mit einer solche Gießmasse 40 auch kompliziertere dreidimensionale Formen von Verbundwerkstoffen realisierbar sind.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Verfahren zur Herstellung eines partikulären Füllstoffs mit geringer Staubbildung, der zur Verwendung in Verbundwerkstoffen geeignet ist, wobei die mittlere Partikelgröße des Füllstoffs gemessen mittels Luftstrahlsiebung und/oder Sedigraph ≤ 300 µm beträgt
**gekennzeichnet durch** die Schritte:
Bereitstellen von Trägerpartikeln, welche eine mittlere Partikelgröße gemessen mittels Luftstrahlsiebung und/oder Sedigraph ≤ 300 µm aufweisen,
Bereitstellen eines Silans, Siloxans und/oder Silicones,
Bereitstellen eines Paraffinöls,
Herstellen einer flüssigen Beschichtungsmasse durch Vermengen des Silans und des Paraffinöls und optional weiterer Komponenten,
Beschichten der Trägerpartikel mit der Beschichtungsmasse in einer Mischeinrichtung.

2. Verfahren nach Anspruch 1,
**dadurch gekennzeichnet, dass**
die Trägerpartikel ausgewählt sind aus einer Gruppe, die Silikate, Carbonate, Sulfate, Phosphate, Oxide, Kohlenstoff-basiert, natürlich oder synthetisch, kristallin oder amorph, geogen oder biogen oder Mischungen dieser umfasst, bevorzugt aus einer Gruppe, die Kaolin, Montmorillonit, Talkum, Glimmer, Quarz, Sepiolith, Nakrit, Halloysit, Dickit, K-, Ca-. Na- oder Misch-Feldspäte, Wollastonit, Calcit, Dolomit, Baryt, Basalt, Korund, Glas, Borosilikatglas, Quarzglas, Keramik, recyclierten oder nachwachsenden Rohstoff und Mischungen dieser untereinander und Mischungen dieser mit anderen Substanzen umfasst, wobei falls ein nachwachsender Rohstoff verwendet wird dieser vorzugsweise als gemahlene und/oder gebrochene Partikel vorliegen, deren Rohmaterial ausgewählt sind aus einer Gruppe, die Kerne, Schalen, Kernfolgeprodukte, Schalenfolgeprodukte, biobasierte Kunststoffe, biobasierte Monomere, biobasierte Polymere, Ligninfolgeprodukte, Holz, Holzfolgeprodukte (beispielsweise Späne, Fasern, Zellstoff, Lignin, Kork, Laub, Nadeln), Papier, Karton, Pressspanmaterialien, MDF (Mitteldichte Holzfaserplatte), HDF (Hochdichte Faserplatte), OSB (englisch für oriented strand board, Grobspanplatten), Faserverbunde, imprägnierte Faserverbunde, Dämmmaterialien, Kurzumtriebspflanzen und deren Folgeprodukte (beispielsweise Baumwolle, Gras, Stroh, Spelzen, Kleie, Hanffasern, Sisal, Jute), Obst- und Ackerfrüchte und deren Folgeprodukte (beispielsweise Zuckerrübenfasern, Melasse, Trester), Fermentationsmaterialien, Fermentationsrückstände und Vergleichbares (beispielsweise Hefezellen, Filtrationsrückstände der Wein, Saft und Bierherstellung), und Materialien tierischen Ursprungs (beispielsweise Wolle, Haare, Knochen) sowie Verbrennungsrückstände der zuvor genannten Materialien, insbesondere Aschen aus der Verbrennung von Kernen und deren Folgeprodukte, Schalen und deren Folgeprodukte und Spelzen umfasst.

3. Verfahren nach wenigstens einem der vorangegangenen Ansprüche,
**dadurch gekennzeichnet, dass**
das Silan ausgewählt aus einer Gruppe, die lineare, unverzweigte, verzweigte, cyclische, Mono-, Di-, Trisilane, ein- oder mehrfach funktionalisierte Silane wie beispielsweise Alkyl-, Amino-, Methacryl-, Vinyl- und/oder Epoxy-funktionalisierte Silane, und weitere, als Reinstoff oder als Verdünnung und / oder Mischungen mit sich oder anderen umfasst und/oder
das Siloxan ein flüssiges Siloxan ist, welches linear oder cyclisch ist, und/oder das Silicone eine Molekülmasse von 160 bis 150.000 g/mol, eine Dichte von 0,76 bis 1,07 g/cm³ und/oder eine Viskosität von 0,6 bis 1.000.000 mPa·s aufweist.

4. Verfahren nach wenigstens einem der vorangegangenen Ansprüche,
**dadurch gekennzeichnet, dass**
als Mischeinrichtung ein Zwangsmischer verwendet wird, bevorzugt ein Mischer mit rotierendem Mischwerkzeug, weiter bevorzugt ein Pflugmischer und insbesondere bevorzugt ein Pflugmischer mit beweglicher Trommel.

5. Verfahren nach wenigstens einem der vorangegangenen Ansprüche,
**dadurch gekennzeichnet, dass**
die Beschichtungsmasse zumindest phasenweise während des Mischvorgangs in den Mischer geleitet, bevorzugt eingesprüht wird.

6. Verfahren nach wenigstens einem der vorangegangenen Ansprüche,
**dadurch gekennzeichnet, dass**
zur Herstellung der Beschichtungsmasse das Silan, Siloxan und/oder Silicone mit dem Paraffinöl in einem Gewichtsverhältnis von 80:20 bis 40:60, bevorzugt 70:30 bis 50:50 und besonders bevorzugt im Gewichtsverhältnis von 60:40 (vorzugsweise ± ≤ 5, weiter bevorzugt ± ≤ 3) gemischt wird.

7. Verfahren nach wenigstens einem der vorangegangenen Ansprüche,
**dadurch gekennzeichnet, dass**
pro 100 Gewichtsteile der Trägerpartikel 0,1 - 10 Gewichtsteile Beschichtungsmasse eingesetzt werden, vorzugsweise 0,2 - 5 Gewichtsteile Beschichtungsmasse, weiter bevorzugt 0,5 - 2 Gewichtsteile Beschichtungsmasse und insbesondere bevorzugt etwa 1 (vorzugsweise ± ≤ 0,2, weiter bevorzugt ± ≤ 0,1) Gewichtsteil Beschichtungsmasse.

8. Verfahren nach wenigstens einem der vorangegangenen Ansprüche,
**dadurch gekennzeichnet, dass**
die mit der Beschichtungsmasse beschichteten Trägerpartikel thermisch behandelt werden,
vorzugsweise über einen Zeitraum von 5 Minuten bis 5 Stunden, weiter bevorzugt von 10 Minuten bis 2 Stunden, mehr bevorzugt von 15 Minuten bis 1 Stunde und insbesondere bevorzugt etwa 30 Minuten (vorzugsweise ± ≤ 10 Minuten, weiter bevorzugt ± ≤ 5 Minuten) und/oder
bei einer Temperatur im Bereich von 30 - 300 °C, bevorzugt 40 - 200 °C, weiter bevorzugt 50 - 150 °C und insbesondere bevorzugt 70 - 100 °C (vorzugsweise ± ≤ 3 °C, weiter bevorzugt ± ≤ 2 °C).

9. Partikulärer Füllstoff mit geringer Staubbildung, der zur Verwendung in Verbundwerkstoffen geeignet ist, wobei der Füllstoff Partikel mit einer mittleren Partikelgröße gemessen mittels Luftstrahlsiebung und/oder Sedigraph ≤ 300 µm umfasst **dadurch gekennzeichnet, dass**
die Partikel jeweils einen Trägerpartikel umfassen, deren mittlere Partikelgröße gemessen mittels Luftstrahlsiebung und/oder Sedigraph ≤ 300 µm beträgt und deren Oberfläche zumindest abschnittsweise mit einer Beschichtungsmasse, die ein Silan, Siloxans und/oder Silicone sowie ein Paraffinöl und optional eine oder mehrere weitere Komponenten umfasst, beschichtet ist.

10. Partikulärer Füllstoff nach Anspruch 9,
**dadurch gekennzeichnet, dass**
die Trägerpartikel ausgewählt sind aus einer Gruppe, die Silikate, Carbonate, Sulfate, Phosphate, Oxide, Kohlenstoff-basiert, natürlich oder synthetisch, kristallin oder amorph, geogen oder biogen oder Mischungen dieser umfasst, bevorzugt aus einer Gruppe, die Kaolin, Montmorillonit, Talkum, Glimmer, Quarz, Sepiolith, Nakrit, Halloysit, Dickit, K-, Ca-. Na- oder Misch-Feldspäte, Wollastonit, Calcit, Dolomit, Baryt, Basalt, Korund, Glas, Borosilikatglas, Quarzglas, Keramik, recyclierten oder nachwachsenden Rohstoff und Mischungen dieser untereinander und Mischungen dieser mit anderen Substanzen umfasst, wobei falls ein Trägerpartikel einen nachwachsenden Rohstoff umfasst, dieser vorzugsweise als gemahlener und/oder gebrochener Partikel vorliegt, dessen Rohmaterial ausgewählt ist aus einer Gruppe, die Kerne, Schalen, Kernfolgeprodukte, Schalenfolgeprodukte, biobasierte Kunststoffe, biobasierte Monomere, biobasierte Polymere, Ligninfolgeprodukte, Holz, Holzfolgeprodukte (beispielsweise Späne, Fasern, Zellstoff, Lignin, Kork, Laub, Nadeln), Papier, Karton, Presspahnmaterialien, MDF (Mitteldichte Holzfaserplatte), HDF (Hochdichte Faserplatte), OSB (englisch für oriented strand board, Grobspanplatten), Faserverbunde, imprägnierte Faserverbunde, Dämmmaterialien, Kurzumtriebspflanzen und deren Folgeprodukte (beispielsweise Baumwolle, Gras, Stroh, Spelzen, Kleie, Hanffasern, Sisal, Jute), Obst- und Ackerfrüchte und deren Folgeprodukte (beispielsweise Zuckerrübenfasern, Melasse, Trester), Fermentationsmaterialien, Fermentationsrückstände und Vergleichbares (beispielsweise Hefezellen, Filtrationsrückstände der Wein, Saft und Bierherstellung), und Materialien tierischen Ursprungs (beispielsweise Wolle, Haare, Knochen) sowie Verbrennungsrückstände der zuvor genannten Materialien, insbesondere Aschen aus der Verbrennung von Kernen und deren Folgeprodukte, Schalen und deren Folgeprodukte und Spelzen umfasst.

11. Partikulärer Füllstoff nach wenigstens einem der Ansprüche 9 - 10,
**gekennzeichnet durch**
einen Staubwert W_{R} nach DIN EN 15051-3 gemessen in einem Gegenstrom-Fallrohr von ≤ 100 mg/kg aufweist, vorzugsweise ≤ 70 mg/kg, weiter bevorzugt ≤ 60 mg/kg und insbesondere bevorzugt ≤ 50 mg/kg, und/oder
einen Staubwert W_{I} nach DIN EN 15051-3 gemessen in einem Gegenstrom-Fallrohr von ≤ 10.000 mg/kg aufweist, vorzugsweise ≤ 7.000 mg/kg, weiter bevorzugt ≤ 5.000 mg/kg und insbesondere bevorzugt ≤ 4.000 mg/kg.

12. Partikulärer Füllstoff nach wenigstens einem der Ansprüche 9 - 11
**dadurch gekennzeichnet, dass**
der Füllstoff eine mittlere Partikelgröße, gemessen mittels Luftstrahlsiebung und/oder Sedigraph von 25 - 100 µm aufweist, weiter bevorzugt 45 - 100 µm und/oder die mittlere Partikelgröße, gemessen mittels Luftstrahlsiebung und/oder Sedigraph im Bereich von < 45 µm, speziell < 25 µm, bevorzugt 0,1 - 45 µm, besonders bevorzugt 0,1 - 25 µm beträgt, wobei die Korngrößenverteilungen der Füllstoffe vorzugsweise mono- oder multimodal ist.

13. Verwendung eines partikulären Füllstoffs nach wenigstens einem der Ansprüche 9 - 12 als Füllstoff in einer Gießmasse (40) und/oder einem Verbundwerkstoff.

14. Verbundwerkstoff umfassend ein Bindemittel sowie einen Füllstoff nach wenigstens einem der Ansprüche 9 - 12.

15. Verwendung eines Verbundwerkstoffs nach wenigstens einem der Ansprüche 9 - 12 als oder in einem Objekt, das ausgewählt ist aus einer Gruppe, die eine Küchenspüle, eine Arbeitsplatte, eine Badewanne, ein Waschbecken, eine Fliese, eine Duschtasse und einen Fußbodenbelag umfasst.
